# EUROPÄISCHE PATENTSCHRIFT

(11) **EP 1 092 164 B1**
(45) Veröffentlichungstag und Bekanntmachung des Hinweises auf die Patenterteilung: **19.03.2003**
(21) Anmeldenummer: 99932749.7
(22) Anmeldetag: 29.06.1999
(51) Int. Cl.: G02B 1/11

(54) **VERFAHREN ZUR HERSTELLUNG VON ANTIREFLEXSCHICHTEN**
METHOD FOR PRODUCING ANTI-REFLECTION COATINGS
PROCEDE DE PRODUCTION DE COUCHES ANTIREFLET

(30) Priorität: 30.06.1998 DE 19829172
(43) Veröffentlichungstag der Anmeldung: 18.04.2001
(73) Patentinhaber: Universität Konstanz, 78464 Konstanz (DE)
(72) Erfinder: STEINER, Ullrich, D-78464 Konstanz (DE); WALHEIM, Stefan, D-78476 Allensbach (DE); SCHÄFFER, Erik, D-78464 Konstanz (DE); EGGERT, Stefan, D-78476 Allensbach (DE); MLYNEK, Jürgen, D-78315 Radolfzell (DE)
(74) Vertreter: Müller-Boré & Partner Patentanwälte
(86) Internationale Anmeldenummer: EP9904491
(87) Internationale Veröffentlichungsnummer: WO00000854

(56) Entgegenhaltungen:
- EP-A- 0 775 669
- EP-A- 0 778 476
- US-A- 4 271 210
- US-A- 4 830 879
- WALHEIM S ET AL: "Nanophase-separated polymer films as high-performance antireflection coatings" SCIENCE, 22 JAN. 1999, AMERICAN ASSOC. ADV. SCI, USA, Bd. 283, Nr. 5401, Seiten 520-522, XP002119270 ISSN: 0036-8075
- BOLTAU M ET AL: "Surface-induced structure formation of polymer blends on patterned substrates" NATURE, 26 FEB. 1998, MACMILLAN MAGAZINES, UK, Bd. 391, Nr. 6670, Seiten 877-879, XP002118826 ISSN: 0028-0836

## Beschreibung

Die vorliegende Erfindung betrifft ein Verfahren zur Herstellung eines Elements, umfassend ein Substrat und mindestens eine antireflektierende Schicht, die Poren aufweist, deren Dimensionen unterhalb der Wellenlänge des sichtbaren Lichts oder angrenzender Spektralbereiche liegen, sowie ein durch dieses Verfahren erhältliches Element mit mindestens einer antireflektierenden Schicht, insbesondere optische Linsen, Spiegeln oder anderen optischen Bauelemente, wobei diese Elemente eine wesentlich verbesserte optische Vergütung aufweisen.

Die Verwendung dünner Schichten zur Vergütung von optischen Bauelementen ist bekannt. Zur Reduktion des reflektierten Lichts an der Grenzfläche zweier optischer Medien mit unterschiedlichen Brechungskoeffizienten wird an dieser Grenzfläche eine optische Schicht aufgebracht, deren Brechungsindex zwischen dem der beiden optischen Medien liegt.

Weiterhin ist bekannt, daß sich diese Vergütung dadurch verbessern läßt, indem statt einer Schicht mehrere Schichten verwendet werden und sich hierbei Schichten mit hohem und niedrigem Brechungsindex abwechseln. Eine Vergütung mit drei Schichten reduziert zum Beispiel die Reflektivität einer Glas-Luft-Grenzfläche von 4,3 % der Gesamtintensität auf weniger als 1 % über den gesamten sichtbaren Spektralbereich. Optische Vergütungen sind vor allem für Linsensysteme mit mehreren Luft-Glas-Übergängen wichtig, da sich die Reflexionsverluste an jeder Grenzfläche aufsummieren.

Berechnungen der Reflektivität der Grenzfläche zwischen zwei Medien mit den Brechungskoeffizienten n₀ und n₁ erlauben die Bestimmung der optischen Eigenschaften einer Antireflexschicht. Optimal ist eine Schicht, deren Brechungsindex die Wurzel aus dem Produkt n₁ x n₀ beträgt. Für monochromatisches Licht geht die Reflektivität dann auf 0 zurück, wenn die optische Dicke der Schicht ein Viertel der Wellenlänge des eingestrahlten Lichts beträgt. Für Luft und Glas mit n₀ = 1 und n₁ = 1,52 zum Beispiel beträgt der optimale Brechungsindex einer Entspiegelungsschicht 1,23. Das für Antireflexschichten häufig verwendete Material Magnesiumfluorid hat jedoch einen Brechungskoeffizienten von 1,38 und bewirkt somit lediglich eine Reduktion der Reflektivität an der Glas-Luft-Grenzfläche auf 1,3 - 2%. Materialien, die im sichtbaren Wellenlängenbereich oder im angrenzenden Infrarot bzw. Ultraviolett Brechungsindizes kleiner als 1,3 besitzen, sind nicht bekannt.

Eine Vergütung mit einer Antireflexschicht verringert die Reflektivität der Grenzfläche optimal bei derjenigen Wellenlänge, die einem Viertel der optischen Dicke der Antireflexschicht entspricht. Für andere Wellenlängen kommt es zu einer höheren Reflektivität des einfallenden Lichts. Durch Verwendung von mehreren Antireflexschichten läßt sich die Reflektivität in einem breiteren Wellenlängenbereich gleichmäßig reduzieren. Mittels Berechnungen können auch hier die optischen Eigenschaften einer Schichtfolge von Antireflexschichten bestimmt werden. Optimal sind mehrere Schichten, deren optische Dicke jeweils ein Viertel einer sogenannten Referenzwellenlänge beträgt. Der Brechungsindex des Mehrschichtensystems sollte idealerweise schrittweise zwischen den Brechungskoeffizienten der beiden Medien variieren. Für eine Glas-Luft-Grenzfläche ist dies derzeit mit bekannten Mitteln nicht durchführbar, da Materialien mit Brechungsindizes kleiner als 1,3 nicht zur Verfügung stehen.

Ein neuerer Ansatz zur beschriebenen Technologie besteht in der Verwendung von sogenannten nanoporösen Materialien. Materialien, die Poren bzw. Lufteinschlüsse aufweisen, deren Dimensionen unterhalb der Wellenlänge des sichtbaren Lichts liegen, weisen einen effektiven Brechungsindex auf, der durch das Mittel über den Brechungsindex des Materials und denjenigen der Luft gegeben ist. Durch Variation der Anzahl der Poren pro Volumen und/oder durch Variation des gesamten Volumenanteils der Poren läßt sich somit der Brechungsindex kontinuierlich vom Brechungsindex des Substrats auf einen Brechungsindex, der nahe bei 1 liegt, einstellen. Derzeit sind zwei Verfahren im Stand der Technik bekannt, die diesen neueren Ansatz aufgreifen, nämlich ein Verfahren, das die Sol-Gel-Verfahrenstechnik verwendet, sowie ein sogenanntes Prägeverfahren. Beide Verfahren weisen jedoch den entscheidenden Nachteil auf, daß die Herstellung von Schichten mit den gewünschten Eigenschaften sehr aufwendig ist und zudem nur die Herstellung von Einfachschichten erlaubt.

Somit liegt der vorliegenden Erfindung die Aufgabe zugrunde, ein möglichst einfaches, schnelles und kostengünstiges Verfahren zur Herstellung von solchen Elementen, die ein Substrat und mindestens eine reflektionsmindernde Schicht umfassen, wie beispielsweise optische Linsen, Spiegeln und andere optische Bauelemente, bereitzustellen, wobei solche Elemente eine wesentlich verbesserte optische Vergütung aufweisen sollen. Eine weitere Aufgabe der vorliegenden Erfindung ist die Bereitstellung eines Elements, das im Fall einer Substrat-(z.B. Glas)-Luft-Grenzfläche einen Brechungsindex von kleiner als 1,3 zeigen soll.

Diese Aufgabe wird durch die in den Ansprüchen gekennzeichneten Ausführungsformen gelöst. Insbesondere wird ein Verfahren zur Herstellung eines Elements, umfassend ein Substrat und mindestens eine antireflektierende Schicht, die Poren aufweist, deren Dimensionen unterhalb der Wellenlänge des sichtbaren Lichts oder angrenzender Spektralbereiche liegen, bereitgestellt, umfassend die Schritte
- des Bereitstellen eines Substrats,
- des Aufbringens einer Lösung aus mindestens zwei miteinander inkompatiblen Polymeren, die in einem gemeinsamen Lösungsmittel derart gelöst werden, daß eine gemeinsame durchmischte Phase entsteht, auf das Substrat, wobei unter Phasentrennung auf dessen Oberfläche eine Schicht mit im wesentlichen lateral alternierenden Polymerphasen entsteht, und
- des Aussetzens dieser Schicht einem weiteren Lösungsmittel, so daß mindestens ein Polymer ungelöst bleibt.

Bei der Durchführung des Aufbringens der Lösung aus mindestens zwei miteinander inkompatiblen Polymeren gemäß dem Verfahren der vorliegenden Erfindung findet dabei in einer zwei- oder mehrkomponentigen ("inkompatiblen") Mischung makromolekularer Substanzen, die im wesentlichen nicht mischbar, d.h. inkompatibel, sind, eine Phasentrennung statt. Dafür geeignete makromolekulare Substanzen sind insbesondere Polymere oder Oligomere - im folgenden zusammengefaßt als Polymere bezeichnet. Grundsätzlich unterliegen die im Rahmen des erfindungsgemäßen Verfahrens verwendbaren Polymere keinerlei Beschränkungen, außer daß in den eingesetzten Polymerkombinationen die jeweils verwendeten Polymere im wesentlichen nicht miteinander mischbar bzw. inkompatibel sind. Unter Verwendung von bekannten Polymeren in den jeweiligen Polymerkombinationen bzw. -mischungen, wie z.B. Polystyrol, Polymethylmethacrylat, Polymethacrylat, Polyacrylat, Polyvinylpyridin oder Polyvinylchlorid, die allesamt Brechungsindizes um 1,5 aufweisen, lassen sich gemäß dem Verfahren der vorliegenden Erfindung Antireflexschichten mit Brechungskoeffizienten unter 1,3, beispielsweise auch unter 1,2, erzeugen. Als miteinander nicht kompatible Polymere können beispielsweise Polystyrol und Polymethylmethacrylat oder Polystyrol und Polyvinylchlorid eingesetzt werden. Der Brechungsindex der antireflektierenden Schicht ergibt sich dabei aus der Wurzel des Produkts des Brechungsindex des optischen Substrats und des angrenzenden Mediums.

Durch das erfindungsgemäße Verfahren sind Elemente aus beispielsweise Glas, Plexiglas und Polycarbonat erhältlich, die im Fall, wenn das angrenzende Medium Luft ist, einen Brechungsindex von kleiner als 1,3 zeigen. Für antireflektierende Schichten, die aus mehreren Lagen bzw. Schichten bestehen, müssen im Falle des Vorliegens von einer bzw. mehreren Schichten mit einem Brechungsindex von größer als 1,3, eine oder mehrere der weiteren Schichten einen Brechungsindex von kleiner als 1,2 bzw. kleiner als 1,1 aufweisen. Werden fluorierte Polymere, wie z.B. das von Du Pont im Handel erhältliche Teflon AF, mit einem Brechungsindex von etwa 1,3 verwendet, so sind gemäß dem erfindungsgemäßen Verfahren Antireflexschichten mit Brechungskoeffizienten unterhalb von 1,1 erzielbar.

Die ausgewählten Polymere werden in einer, auf sämtliche Komponenten als Lösungsmittel wirkenden Substanz, wie beispielsweise Toluol, Benzol, Tetrahydrofuran, Ethanol, Aceton und Methanol, derart gelöst, daß eine gemeinsame durchmischte Phase entsteht. Aus dieser Lösung wird dann durch Aufschleudem ("spin coating"), Eintauchen ("dip coating"), Aufsprühen oder anderweitiges Aufbringen auf einem geeigneten Substrat eine Schicht bzw. ein Film erzeugt. Unter der Voraussetzung, daß die ausgewählten Polymere untereinander im wesentlichen nicht mischbar sind, setzt während der Schichtherstellung die Phasentrennung ein.

Die derart erzeugte Schicht, die beispielsweise eine Dicke von 50 bis 500 nm, vorzugsweise 50 bis 300 nm aufweist, enthält nach der Herstellung zwei oder mehrere, meist in einer lateralen Anordnung vorliegende Phasen. Zum Erhalt einer Antireflexschicht wird in einem weiteren Schritt unter Verwendung eines selektiven Lösungsmittels, das nur eines der eingesetzten Polymere löst, diejenige Phase entfernt, die zum größten Teil aus diesem Polymer besteht. Bei einer mehrkomponentigen Mischung kann dieser Schritt bei Bedarf mehrfach wiederholt werden. Durch Variation des Mengenverhältnisses der Komponenten, die in dem weiteren Schritt des erfindungsgemäßen Verfahrens aufgelöst bzw. weggelöst werden, läßt sich auf diese Weise der effektive Brechungsindex der Antireflexschicht einstellen, d.h. das Mischungsverhältnis der Polymere wird in Abhängigkeit von dem gewünschten Brechungsindex der antireflektierenden Schicht eingestellt.

Ein derartiges Entmischen ist aus Walheim et al.,Macromolecules, Band 30, Seite 4995-5003 (1997), prinzipiell bekannt. Darin wird das Entmischungsverhalten einer Mischung aus Polystyrol und Polymethylmethacrylat aus einem Lösungsmittel während der Schichtbildung beschrieben. Die dort dargestellten Entmischungsprozesse können als physikalische Grundlage für die Herstellung von Antireflexschichten gemäß dem Verfahren der vorliegenden Erfindung angesehen werden. Allerdings liegt die Dimension der gebildeten Strukturen im Bereich von 1 bis 6 µm, d.h. sie sind um etwa eine Zehnerpotenz größer als die optische Wellenlänge und eignen sich daher grundsätzlich nicht für Vergütung von optischen Linsen, Spiegeln oder dergleichen. Derart beschichtete optische Bauelemente erscheinen nämlich trübe, da eingestrahltes Licht an den erzeugten Entmischungsstrukturen gestreut wird.

Die optische Vergütung gemäß der vorliegenden Erfindung kann durch eine oder mehrere der vorstehenden, gemäß dem Verfahren der vorliegenden Erfindung hergestellten, nanoporösen Polymerschichten bewirkt werden. In einer Ausführungsform des erfindungsgemäßen Verfahrens wird die optische Vergütung durch eine nanoporöse Struktur innerhalb des Substrats bewirkt, die unter Verwendung der wie oben hergestellten nanoporösen Polymerschichten durch beispielsweise einen Ätzprozeß erzeugt wird, wobei die durch das erfindungsgemäße Verfahren gebildeten nanoporösen Polymerschichten als Maske bzw. Schablone wirken. Auch bei der Herstellung dieser Schichten läßt sich durch die geeignete Parameterwahl erreichen, daß die Dimension der Poren in der Phasenmorphologie unter der Wellenlänge des sichtbaren Lichts liegt.

Die durch das erfindungsgemäße Verfahren gebildete antireflektierende Schicht kann beispielsweise als Einzel- oder Mehrfachschicht ausgestaltet werden. In einer bevorzugten Ausführungsform kann die mindestens eine antireflektierende Schicht als eine antireflektierende Gradientenschicht ausgebildet werden, indem die Schicht nur solange einem selektiven Lösungsmittel ausgesetzt wird, daß keine Polymerkomponente vollständig entfernt wird. Vorzugsweise wird eine solche antirefiektierende Gradientenschicht dergestalt ausgebildet, daß der Volumenanteil der in der Schicht der gebildeten Poren bzw. Lufteinschlüsse eine derartige Funktion des Abstands von der Schichtoberfläche darstellt, daß die Schicht einen Gradienten des Brechungsindex aufweist, so daß der Brechungsindex nach und nach vom Brechungsindex des einen Mediums in denjenigen des anderen Mediums übergeht. Typischerweise ist ein solcher Gradient dadurch gekennzeichnet, daß er kontinuierlich vom Wert des optischen Substrats in das angrenzende Medium übergeht. Für eine Luft-Glasgrenzfläche verläuft der Gradient zwischen Werten des Brechungsindex von 1,0 bis 1,5. Jedoch sind auch Gradienten, die teilweise einen solchen Verlauf aufweisen, möglich.

Das durch das erfindungsgemäße Verfahren erhältliche Element kann beispielsweise eine optische Linse oder ein Spiegel sein.

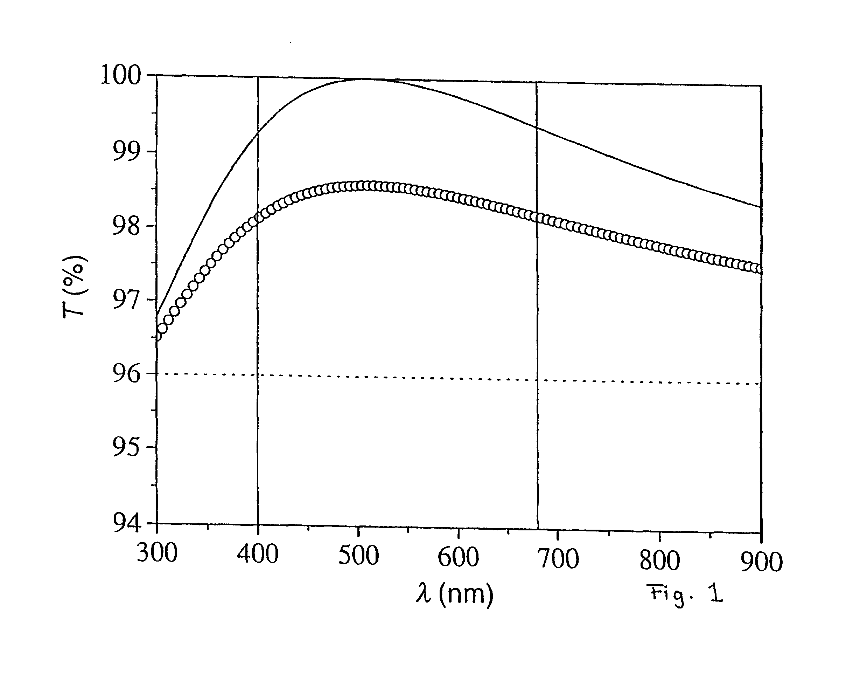

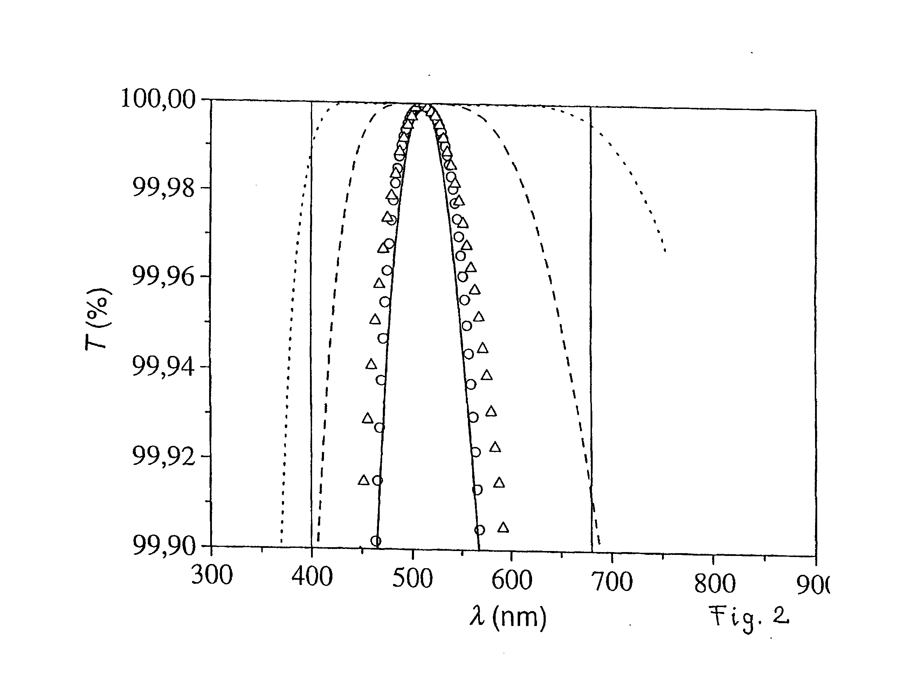

In den Figuren 1 und 2 ist ein Vergleich der berechneten optischen Transmissionen nanoporöser Polymerschichten mit herkömmlichen Antireflexbeschichtungen dargestellt.

In Fig. 1 wird eine nanoporöse Einzelschicht mit einem Brechungsindex n = 1,225 einer herkömmlichen Schicht aus Magnesiumfluorid gegenübergestellt. Dazu ist dort die berechnete Transmission einer Grenzfläche zwischen Luft mit n₀ = 1 und Glas mit n₁ = 1,5 als Funktion der Wellenlänge des eingestrahlten Lichts aufgetragen. Die runden Symbole entsprechen einer Antireflexbeschichtung aus Magnesiumfluorid, die durchgezogene Linie einer erfindungsgemäßen Polymerschicht mit n = 1,225. Zum Vergleich demonstriert die gepunktete Linie die Reflektivität einer unbeschichteten Glasoberfläche. Die optische Dicke der betrachteten Schichten beträgt ein Viertel der Referenzwellenlänge von 510 nm. Aus Fig. 1 ist zu entnehmen, daß eine erfindungsgemäße Polymerschicht gegenüber der herkömmlichen Beschichtung eine wesentlich erhöhte Transmission von 98 bis 98,5 % auf 99,5 bis 100 % über den gesamten sichtbaren Spektralbereich zeigt. In Fig. 2 werden herkömmliche Mehrfachschichten nanoporösen Einzel- und Mehrfachschichten gegenübergestellt. Dazu ist dort ebenfalls die berechnete Transmission einer Grenzfläche zwischen Luft mit n₀ = 1 und Glas mit n₁ = 1,5 als Funktion der Wellenlänge des eingestrahlten Lichts aufgetragen. Dabei zeigt sich, daß bereits eine erfindungsgemäße Einzelschicht (durchgezogene Linie) vergleichbare Antireflexeigenschaften wie eine Dreifachschicht aus MgF₂, Nd₂O₃ und ThO₂ (runde Symbole), eine der gebräuchlichen Antireflexmehrfachschichten, besitzt. Die gestrichelte Linie entspricht einer nanoporösen Polymerdoppelschicht mit Brechungsindizes von n = 1,107 bzw. 1,355 und die gepunktete Linie eine nanoporöse Polymerdreifachschicht mit n = 1,060; 1,234 bzw. 1,426. Die Symbole entsprechen herkömmlichen Dreifachschichten mit n = 1,38; 2,02 bzw. 1,80 (runde Symbole) und n = 1,38; 2,20 bzw. 1,70 (dreieckige Symbole). Die optische Dicke der betrachteten Schichten beträgt ein Viertel der Referenzwellenlänge von 510 nm. Lediglich im Fall der Schicht mit n = 2,20 (dreieckige Symbole) beträgt die optische Dicke die Hälfte der Referenzwellenlänge. Fig. 2 zeigt deutlich, daß eine erfindungsgemäße Polymerdoppelschicht die Reflexion im gesamten sichtbaren Wellenlängenbereich auf unter 0,1 %, eine Polymerdreifachschicht sogar auf unter 0,01 % reduziert. Die Reflexionswerte von erfindungsgemäßen Doppel- und Dreifachschichten liegen somit mehrere Größenordnungen unter denjenigen bekannter Beschichtungen.

Gemäß dem erfindungsgemäßen Verfahren kann bzw. können die Polymerschicht(en) direkt auf dem zu beschichtenden Substrat, z.B. einer optischen Linse, einem Spiegel oder dergleichen, hergestellt werden. In einer weiteren erfindungsgemäßen Ausführungsform kann jeder der beschriebenen Schritte auf einem Trägersubstrat durchgeführt werden, von dem die Schichten dann abgelöst und auf das eigentliche Substrat übertragen werden. In einer anderen Ausführungsform können mindestens zwei Schichten auf jeweils verschiedenen Oberflächen hergestellt werden und die zweite Schicht und gegebenenfalls alle weiteren Schichten anschließend von den jeweiligen Substraten abgelöst und dann der ersten Schicht überlagert werden. In einer weiteren Ausführungsform kann zunächst eine erste Schicht hergestellt werden, daran anschließend eine zweite Schicht direkt auf die erste Schicht aufgebracht werden und dann in der zweiten Schicht mindestens ein weiteres Polymer in einem Lösungsmittel gelöst werden, das keines der Polymere in der ersten Schicht löst, d.h. die zunächst hergestellte Mehrfachschicht wird anschließend einem Lösungsmittel ausgesetzt, das selektiv nur eines (oder mehrere, jedoch nicht alle, für den Fall, daß mehrere Polymere eingesetzt werden) der Polymere löst.

Im folgenden wird die Erfindung anhand von bevorzugten Ausführungsformen näher erläutert, ohne jedoch darauf beschränkt zu sein.
1. Herstellung einer Einzelschicht, deren Dicke ein Viertel einer Referenzwellenlänge des sichtbaren Lichts entspricht
   Zwei oder mehrere, miteinander inkompatible makromolekulare Substanzen (Polymere) werden in einem geeigneten Lösungsmittel gelöst, das alle verwendeten Polymere löst. Eine Schicht wird derart hergestellt, daß die Größe der phasenseparierten Domänen, die bei der Schichtherstellung entstehen, unterhalb der Referenzwellenlänge liegt. Die Größe dieser phasenseparierten Domänen läßt sich im Rahmen des "spin coating"-Schrittes durch spezifische Einstellung einiger Parameter, wie insbesondere das Molekulargewicht der verwendeten Polymere, deren Kettenlänge, die Wahl des Lösungsmittels und damit verbunden die Löslichkeit der Polymere darin, die Beschleunigung und die Umdrehungsgeschwindigkeit der Lackschleuder und der Siedepunkt des Lösungsmittels, steuern. Diese Schicht wird dann in einem weiteren Schritt einem Lösungsmittel ausgesetzt, das selektiv nur eines (oder mehrere, jedoch nicht alle, für den Fall, daß mehrere Polymere eingesetzt werden) der Polymere löst. Besteht diese Schicht aus mehr als zwei verschiedenen Polymeren, so kann dieser Schritt unter Umständen mehrfach, gegebenenfalls mit mehreren unterschiedlichen Lösungsmitteln erfolgen.
2. Herstellung von Mehrfachschichten durch Überlagerung von Einzelschichten
   Eine erste Polymerschicht wird wie in der ersten Ausführungsform direkt auf die zu entspiegelnde Oberfläche aufgebracht, ohne daß diese in einem zweiten Schritt bereits einem Lösungsmittel ausgesetzt wird. Weitere Schichten werden entsprechend separat auf anderen Substraten hergestellt, wobei jeweils das Mischungsverhältnis der Polymere, das typischerweise im Bereich von 1:10 bis 10:1 liegt, derart gewählt wird, daß die schließlich durch das erfindungsgemäße Verfahren hergestellten Antireflexschichten den gewünschten Brechungsindex aufweisen.
   Die Schichten werden von den jeweiligen Substraten abgelöst und auf die erste, zweite usw. Schicht aufgebracht. Die so hergestellte Mehrfachschicht wird anschließend einem Lösungsmittel ausgesetzt, das selektiv mindestens eines (oder mehrere, jedoch nicht alle, für den Fall, daß mehrere Polymere eingesetzt werden) der Polymere löst. Besteht die Mehrfachschicht aus mehr als zwei unterschiedlichen Polymeren, so kann dieser Schritt unter Umständen mehrfach, gegebenfalls mit mehreren unterschiedlichen Lösungsmitteln erfolgen.
3. Herstellung von Mehrfachschichten durch sequentielles Aufbringen von Einzelschichten
   Eine erste Polymerschicht wird wie in der ersten Ausführungsform direkt auf die zu entspiegelnde Oberfläche aufgebracht, ohne daß diese in einem zweiten Schritt bereits einem Lösungsmittel ausgesetzt wird. Für eine zweite Schicht werden zwei oder mehrere Polymere in einem Lösungsmittel gelöst, das mindestens eines der Polymere in der ersten, darunterliegenden Schicht nicht löst. Mit anderen Worten gesagt, aus der ersten Schicht kann mindestens eine der Polymerkomponenten herausgelöst werden. Die zweite Schicht wird direkt auf die erste aufgebracht. Dieses Verfahren kann iterativ durchgeführt werden, wobei darauf zu achten ist, daß das Lösungsmittel der zu präparierenden Schicht nicht die darunterliegende Schicht anlöst. Wie in den ersten beiden Ausführungsformen wird die Mehrfachschicht einem selektiven Lösungsmittel ausgesetzt, das nur eines (oder mehrere, jedoch nicht alle, für den Fall, daß mehrere Polymere eingesetzt werden) der Polymere löst. Dieser Schritt kann gegebenenfalls mehrfach, gegebenenfalls mit unterschiedlichen Lösungsmitteln, wiederholt werden.
4. Herstellung einer antireflektierenden Mehrfachschicht, die einen Gradienten im Brechungsindex normal zur Schichtoberfläche aufweist
   Eine Schicht wird zunächst wie in der ersten Ausführungsform hergestellt. Im Unterschied zur ersten Ausführungsform wird diese Schicht jedoch nicht solange einem selektiven Lösungsmittel ausgesetzt, bis eine der Komponenten vollständig entfernt ist, sondern nur für eine kürzere Zeitspanne. Dadurch wird erreicht, daß der Volumenanteil der herausgelösten Poren eine Funktion des Abstands von der Schichtoberfläche ist. Die derart hergestellte Schicht weist einen Brechungsindex auf, der nach und nach vom Brechungsindex des einen Mediums in denjenigen des anderen Mediums übergeht.
5. Nanoporöse Schichten als Ätzmasken
   Eine nanoporöse Schicht wird beispielsweise wie in der ersten Ausführungsform hergestellt. Die so beschichtete Oberfläche wird einer Ätzlösung (z.B. Flußsäure) ausgesetzt, die das optische Substrat (z.B. Glas) oder eine vorher aufgebrachte Beschichtung anätzt. Die Ätzlösung ätzt das Substrat bzw. die Beschichtung nur an denjenigen Stellen an, die nicht oder nur wenig durch das Polymer bedeckt sind. Es werden demgemäß Poren bzw. Vertiefungen mit geeigneter bzw. entsprechender Tiefe in das Substrat bzw. die Beschichtung geätzt. Die Ätzdauer bestimmt dabei die Dicke der geätzten Schicht; d.h. sie muß so gewählt werden, daß die Porentiefe einem Viertel der Referenzwellenlänge entspricht. Nach Entfernen der Oberfläche aus der Ätzlösung kann die Polymerschicht gegebenenfalls mit Hilfe eines geeigneten Lösungsmittels entfernt werden.
   In dieser Ausführungsform wird demgemäß die nanoporöse Struktur der zunächst erzeugten und schließlich wieder entfernten Polymerschicht in das Substrat bzw. die Beschichtung übertragen. Die Poymerschicht fungiert dabei als Schablone bzw. Maske.
   Das Aufbringen einer nanoporösen Polymerschicht und das nachfolgende Ätzen des Substrats können jeweils mehrfach wiederholt werden.
6. Kombination des Verfahrens mit einem Sol-Gel-Prozeß
   Eine Einfach- oder Mehrfachschicht wird nach einem der zuvor angeführten Ausführungsformen 1 bis 4 hergestellt. Die Schicht wird anschließend einer Lösung ausgesetzt, die sogenannte "Precursor-Moleküle", beispielsweise Metallalkoxide wie Aluminium-sec.-butoxid oder (3-Glycidyloxypropyl)trimethoxysilan, enthält. Diese "Precursor-Moleküle" können anschließend in einem Sol-Gel-Verfahren in einen, in der Regel porösen Festkörper umgewandelt zu werden. Dies kann durch eine chemische Reaktion, die entweder chemisch, photochemisch oder thermisch (z.B. durch Erhitzen) induziert wird, erreicht werden.
   Die Lösung aus Precursor-Molekülen wird derart gewählt, daß sie vorzugsweise nur in eine (oder aber auch in mehrere, jedoch nicht in alle, für den Fall, daß mehrere Polymere eingesetzt werden) der Polymerphasen hineindiffundieren kann oder sich an der Oberfläche oder Grenzfläche anlagert. Anschließend wird das im Stand der Technik bekannte Sol-Gel-Verfahren, eingeleitet und durchgeführt, wodurch die Precursor-Moleküle abgeschieden werden. Danach werden gegebenenfalls sämtliche Polymere entfernt. Es verbleibt eine nanoporöse Schicht, deren Poren kleiner als die Wellenlänge des sichtbaren Lichts sind, auf der Oberfläche des Substrats.
   Eine besonders vorteilhafte Ausgestaltung dieser Ausführungsform besteht darin, bereits dem Lösungsmittel, aus dem die Schicht hergestellt wird, geeignete Precursor-Moleküle zuzugeben, die dazu dienen, in einem Sol-Gel-Verfahren, in einen, in der Regel porösen Festkörper umgewandelt zu werden.
   Auch in diesem Ausführungsbeispiel fungiert die Poymerschicht dabei wiederum als Schablone bzw. Maske.
7. Nanoporöse Schichten als Schablonen für Aufdampfprozesse
   Eine Einfach- oder Mehrfachschicht wird nach einem der zuvor ausgeführten Ausführungsformen 1 bis 4 derart hergestellt, daß die Poren von der Luft bis zur Oberfläche des Substrats durchgängig sind. Dies kann beispielsweise wiederum dadurch erreicht werden, indem das beschichtete Substrat kurz einem Ätzverfahren ausgesetzt wird. Als Ätzverfahren kommen z.B. reaktive lonenätzverfahren, Plasma-Ätzverfahren und Naß-Ätzverfahren in Frage. Die so erhaltene Schicht wird dann mit einem Material, wie z.B. Magnesiumfluorid, Siliciumdioxid, etc., derart bedampft oder besputtert, daß die Poren ausgefüllt werden. Das verbleibende Polymer wird entfernt. Die so entstandene Schicht besteht aus einem anorganischen Material und weist Poren auf, deren Größen unterhalb der Wellenlänge des sichtbaren Lichts liegen.

Im folgenden wird die Erfindung anhand eines typischen Ausführungsbeispiels näher erläutert, ohne jedoch darauf beschränkt zu sein.

In einem typischen Ausführungsbeispiel wurden Polystyrol (PS) und Polymethylmethacrylat (PMMA), mit Molekulargewichten von etwa jeweils 10 kg/mol (d.h. einem Molekulargewicht von jeweils etwa 10.000), eingesetzt. PS und PMMA wurden dabei im Mischungsverhältnis 70:30 in Tetrahydrofuran (2 Gew.-% Polymer) gelöst. Als Substrat wurde beispielsweise ein Mikroskopobjektträger aus Weißglas verwendet. Auf den Objektträger wurden beidseitig mit Hilfe des Lackschleuderverfahrens eine Polymerschicht bei einer Umdrehungsgeschwindigkeit der Lackschleuder von 1300 U/min aufgebracht. Anschließend wurde der Objektträger für 1 Minute Cyclohexan als Lösungsmittel ausgesetzt, wodurch PS, jedoch nicht PMMA, gelöst wurde. Als Ergebnis dieser Verfahrensschritte wurde ein beidseitig entspiegelter Objektträger erhalten, wobei die beiden Antireflexschichten aus einem jeweils 106 nm dicken PMMA-Film bestanden, der jeweils etwa 100 nm große Poren aufwies. Der Brechungsindex dieser Schichten betrug jeweils 1,225.

In einem anderen Ausführungsbeispiel wurde PMMA durch Polyvinylchlorid (PVC) ersetzt. Der Brechungsindex, die Schichtdicke sowie der Porendurchmesser wiesen die gleichen Werte auf, wie im vorherigen Ausführungsbeispiel angeführt.

## Patentansprüche

1. Verfahren zur Herstellung eines Elements, umfassend ein Substrat und mindestens eine antireflektierende Schicht, die Poren aufweist, deren Dimensionen unterhalb der Wellenlänge des sichtbaren Lichts oder angrenzender Spektralbereiche liegen, umfassend die Schritte
- des Bereitstellen eines Substrats,
- des Aufbringens einer Lösung aus mindestens zwei miteinander inkompatiblen Polymeren, die in einem **gemeinsamen Lösungsmittel** derart gelöst werden, daß eine gemeinsame durchmischte Phase entsteht, auf das Substrat, wobei unter Phasentrennung auf dessen Oberfläche eine Schicht mit im wesentlichen lateral alternierenden Polymerphasen entsteht, und
- des Aussetzens dieser Schicht einem weiteren Lösungsmittel, das selektiv ein oder mehrere der eingesetzten Polymere löst, so daß mindestens ein Polymer ungelöst bleibt.

2. Verfahren nach Anspruch 1, worin die antireflektierende Schicht zunächst auf einem Trägersubstrat hergestellt wird, anschließend von diesem abgelöst und dann auf das zu beschichtende Substrat übertragen wird.

3. Verfahren nach Anspruch 1 oder 2, wobei das Mischungsverhältnis der Polymere in Abhängigkeit von dem gewünschten Brechungsindex der antireflektierenden Schicht eingestellt wird.

4. Verfahren nach einem der Ansprüche 1 bis 3, worin mindestens zwei Schichten auf jeweils verschiedenen Oberflächen hergestellt werden und die zweite Schicht und gegebenenfalls alle weiteren Schichten anschließend von den jeweiligen Substraten abgelöst und dann der ersten Schicht überlagert werden.

5. Verfahren nach einem der Ansprüche 1 bis 3, worin zunächst eine erste Schicht hergestellt wird, daran anschließend eine zweite Schicht direkt auf die erste Schicht aufgebracht wird und dann die so hergestellte Mehrfachschicht anschließend einem Lösungsmittel ausgesetzt wird, das selektiv mindestens eines der Polymere löst.

6. Verfahren nach Anspruch 5, worin dieses Verfahren mehrfach derart wiederholt wird, daß das Lösungsmittel der herzustellenden Schicht mindestens eines der Polymere der darunterliegenden Schicht(en) nicht löst.

7. Verfahren nach einem der Ansprüche 1 bis 3, worin unter Erhalten einer antireflektierenden Gradientenschicht die Schicht nur solange einem selektiven Lösungsmittel ausgesetzt wird, daß keine Polymerkomponente vollständig entfernt wird.

8. Verfahren nach Anspruch 7, wobei der Volumenanteil der herausgelösten Poren eine Funktion des Abstands von der Schichtoberfläche darstellt, daß die derart hergestellte Schicht einen Gradienten des Brechungsindexes aufweist, so daß der Brechungsindex nach und nach vom Brechungsindex des einen Mediums in denjenigen des anderen Mediums übergeht.

9. Verfahren nach einem oder mehreren der vorhergehenden Ansprüche, worin zunächst eine Einfach- oder Mehrfachschicht hergestellt wird, anschließend eine oder mehrere Phasen durch geeignete Lösungsmittel herausgelöst werden und dann so lange einer Ätzlösung ausgesetzt werden, daß auf dem Substrat an den nicht durch das oder die Polymere bedeckten Stellen Poren mit geeigneter Tiefe entstehen.

10. Verfahren nach einem oder mehreren der vorhergehenden Ansprüche, worin zunächst eine Einfach- oder Mehrfachschicht hergestellt wird, anschließend eine oder mehrere Phasen durch geeignete Lösungsmittel herausgelöst werden, dann einer geeigneten Lösung aus Precursor-Molekülen ausgesetzt werden und anschließend ein Sol-Gel-Verfahren unter Abscheidung der Precursor-Moleküle durchgeführt wird.

11. Verfahren nach einem oder mehreren der vorhergehenden Ansprüche, worin zunächst eine Einfach- oder Mehrfachschicht hergestellt wird, wobei einer oder mehreren Lösungen bereits geeignete Precursor-Moleküle zugesetzt wurden, dann ein Sol-Gel-Verfahren unter Abscheidung der Precursor-Moleküle durchgeführt wird und anschließend eine oder mehrere der Polymerphasen entfernt werden.

12. Verfahren nach einem oder mehreren der vorhergehenden Ansprüche, worin zunächst eine Einfach- oder Mehrfachschicht hergestellt wird, anschließend eine oder mehrere Phasen durch geeignete Lösungsmittel herausgelöst werden und dann die so erhaltene Schicht derart mit einem Material bedampft wird, daß die in der Schicht vorhandenen Poren ausgefüllt werden.

## Claims

1. Process for producing an element comprising a substrate and at least one antireflection layer, which has pores whose dimensions are less than the wavelength of visible light or neighbouring spectral ranges, comprising the steps of
- preparing a substrate,
- applying a solution of at least two mutually incompatible polymers, which are dissolved in a common solvent in such a way that a common intermixed phase is obtained, to a substrate, on whose surface a layer essentially having laterally alternating polymer phases is obtained as a result of phase separation, and
- exposing this layer to another solvent, which selectively dissolves one or more of the polymers being used, so that at least one polymer remains undissolved.

2. Process according to Claim 1, in which the antireflection layer is initially produced on a carrier substrate, subsequently detached therefrom, and then transferred onto the substrate to be coated.

3. Process according to Claim 1 or 2, wherein the mixing ratio of the polymers is adjusted as a function of the desired refractive index of the antireflection layer.

4. Process according to one of Claims 1 to 3, in which at least two layers are produced respectively on different surfaces, and the second layer and optionally all the other layers are subsequently detached from the respective substrates and then superimposed on the first layer.

5. Process according to one of Claims 1 to 3, in which a first layer is initially produced, a second layer is subsequently applied directly onto the first layer, and the multiple layer thus produced is subsequently exposed to a solvent which selectively dissolves at least one of the polymers.

6. Process according to Claim 5, in which this process is repeated several times, in such a way that the solvent of the layer to be produced does not dissolve at least one of the polymers of the underlying layer(s).

7. Process according to one of Claims 1 to 3, in which, in order to obtain an antireflection gradient layer, the layer is exposed to a selective solvent only for a length of time such that no polymer components are completely removed.

8. Process according to Claim 7, the proportion by volume of the eroded pores being a function of the distance from the layer surface, such that the layer thus produced has a refractive-index gradient, so that the refractive index changes gradually from the refractive index of one of the media to that of the other medium.

9. Process according to one or more of the preceding claims, in which a single or multiple layer is initially produced, and one or more phases are subsequently eroded by suitable solvents, and then are exposed to an etching solution until pores with a suitable depth are obtained on the substrate at the positions not covered by the polymer or polymers.

10. Process according to one or more of the preceding claims, in which a single or multiple layer is initially produced, one or more phases are subsequently eroded by suitable solvents and then are exposed to a suitable solution of precursor molecules, and a sol-gel process is subsequently carried out with the precursor molecules being deposited.

11. Process according to one or more of the preceding claims, in which a single or multiple layer is initially produced, suitable precursor molecules having already been added to one or more solutions, then a sol-gel process is carried out with the precursor molecules being deposited, and one or more of the polymer phases are subsequently removed.

12. Process according to one or more of the preceding claims, in which a single or multiple layer is initially produced, one or more phases are subsequently eroded by suitable solvents, and then a material is vapour-deposited onto the layer thus obtained, in such a way that the pores present in the layer are filled.

## Revendications

1. Procédé de production d'un élément qui comprend un substrat et au moins une couche antireflet présentant des pores dont les dimensions se situent en dessous de la longueur d'onde de la lumière visible ou des régions spectrales contiguës, comportant les étapes suivantes :
- mise à disposition d'un substrat,
- application, sur le substrat, d'une solution d'au moins deux polymères mutuellement incompatibles qui sont dissous dans un solvant commun de manière à former une phase commune mixte, une couche avec des phases polymères principalement en alternance latérale étant produite avec séparation des phases à la surface du substrat, et
- exposition de cette couche à un autre solvant qui dissout sélectivement un ou plusieurs des polymères utilisés, de manière qu'au moins un polymère reste non dissous.

2. Procédé suivant la revendication 1, dans lequel la couche antireflet est tout d'abord produite sur un substrat de support, puis détachée de ce substrat et transférée ensuite sur le substrat à revêtir.

3. Procédé suivant la revendication 1 ou 2, dans lequel le rapport de mélange des polymères est établi en fonction de l'indice de réfraction souhaité de la couche antireflet.

4. Procédé suivant l'une des revendications 1 à 3, dans lequel au moins deux couches sont produites chacune sur une surface différente et la seconde couche et, le cas échéant, toutes les autres couches sont ensuite détachées des substrats correspondants, puis superposées à la première couche.

5. Procédé suivant l'une des revendications 1 à 3, dans lequel une première couche est tout d'abord produite, puis une seconde couche est appliquée directement sur la première et la couche multiple ainsi réalisée est exposée ensuite à l'action d'un solvant qui dissout sélectivement au moins l'un des polymères.

6. Procédé suivant la revendication 5, dans lequel l'opération est répétée plusieurs fois de manière que le solvant de la couche à établir ne dissolve pas l'un au moins des polymères de la couche ou des couches sous-jacentes,

7. Procédé suivant l'une des revendications 1 à 3, dans lequel la couche n'est exposée à un solvant sélectif que pendant une durée telle qu'aucun composant polymère ne soit totalement éliminé, ce qui donne une couche à gradient antireflet.

8. Procédé suivant la revendication 7, dans lequel la fraction en volume des pores éliminés par dissolution représente une fonction de la distance à la surface de la couche, selon laquelle la couche ainsi produite présente un gradient de l'indice de réfraction de manière telle que ce dernier passe progressivement de l'indice de réfraction de l'un des milieux à l'indice de réfraction de l'autre milieu.

9. Procédé suivant l'une ou plusieurs des revendications précédentes, dans lequel on produit tout d'abord une couche simple ou multiple, puis on enlève une ou plusieurs phases par dissolution au moyen d'un solvant approprié et on fait ensuite agir une solution d'attaque corrosive assez longtemps pour qu'il se forme sur le substrat des pores de profondeur appropriée aux endroits non couverts par le ou les polymères.

10. Procédé suivant l'une ou plusieurs des revendications précédentes, dans lequel on produit tout d'abord une couche simple ou multiple, puis on enlève une ou plusieurs phases par dissolution au moyen de solvants appropriés, on expose ensuite à une solution convenable de molécules précurseurs et on conduit ensuite une opération sol-gel accompagnée d'un dépôt des molécules précurseurs.

11. Procédé suivant l'une ou plusieurs des revendications précédentes, dans lequel on produit tout d'abord une couche simple ou multiple, après avoir déjà ajouté tout d'abord des molécules précurseurs appropriées à une ou plusieurs solutions, puis on conduit une opération sol-gel accompagnée d'un dépôt des molécules précurseurs et on élimine ensuite une ou plusieurs phases polymères.

12. Procédé suivant l'une ou plusieurs des revendications précédentes, dans lequel on produit tout d'abord une couche simple ou multiple, on élimine ensuite une ou plusieurs phases par dissolution au moyen de solvants appropriés et on projette ensuite sur la couche ainsi obtenue la vapeur d'une matière afin de combler les pores présents dans la couche.
